# EUROPEAN PATENT APPLICATION

(11) **EP 1 795 071 A1**
(43) Date of publication of application: **13.06.2007**
(21) Application number: 05077818.2
(22) Date of filing: 07.12.2005
(51) Int. Cl.: A01N 25/08, A01N 25/10, A01N 25/26

(54) **Modified active-ingredient-containing pellets/capsules**

(71) Applicant: Incotec International B.V., 1601 BL Enkhuizen (NL)
(72) Inventor: Legro, Robert Jean, 1602 Enkhuizen (NL); Tetteroo, Fransiscus Abraham Antonius, 1602 Enkhuizen (NL)
(74) Representative: Winckels, Johannes Hubertus F.

(57) **Abstract**

The invention relates to the use of active-ingredients which are advantageous for a plant or a plant seed. More specifically, the invention relates to methods and means for providing an active-ingredient to a plant or a plant seed in need of such an active ingredient.

## Description

The invention relates to the use of active-ingredients which are advantageous for, for example, a plant or a plant seed. More specifically, the invention relates to methods and means for providing an active-ingredient to, for example, a plant or a plant seed in need of such an active ingredient.

Pellets comprising an active-ingredient have for example been disclosed in WO 01/13722. Although these pellets solve some of the problems of the art there is still a need for other active-ingredient pellets.

The present invention solves this problem by providing alternative active-ingredient-containing pellets/capsules.

Such an active-ingredient-containing pellet/capsule is, as will be explained in more detail later, typically combined in the field or in a greenhouse with a seed-containing pellet. The active-ingredient-containing pellet/capsule may also be combined with a true seed, a seedling or a (more mature) plant or with a (potato) tuber or a plant cutting or a flower bulb or a rootstock. In case of pelleted of true seed, said seed may be primed or non-primed.

The term "active ingredient" is typically defined as to comprise any component that is in one way or another advantageous for a plant or a plant seed. The term plant of plant seed includes, a pelleted seed, a true seed, a plant seedling, a rootstock, plant cuttings or plant parts such as for example a potato tuber or flower bulb. Examples of active-ingredients are fungicidal agents, bactericidal agents, insecticidal agents (e.g. Rovral®, Gaucho®, Poncho® (Bayer), nematicidal agents (Avicta® (Syngenta)) biocides, disinfectants, micro organisms, rodent killer, weed killer, attracting agents, repellent agents, plant growth regulators (such as giberillic acid, auxine or cytokine), nutrients (such as potassium nitrate, magnesium sulphate, iron chelate), plant hormones, minerals, plant extracts, acaricides or miticides, molluscicides, germination stimulants, pheromones, biological preparations, etc. etc.

The terms active-ingredient-containing pellet, dummy pellet or dummy pill and smart pellet or smart pill will be used interchangeable herein.

The term "at least one active ingredient" also comprises situations wherein two, three, four or even more active ingredients are present. If multiple active ingredients (for example 3) are used they may be derived from the same class (for example all three are a fungicidal agent) or they may be derived from different classes of active ingredients (for example one fungicide and two growth hormones or one fungicide, one repellent agent and one micro-organism).

In a first embodiment the invention provides an active-ingredient-containing capsule, comprising at least one active ingredient in a liquid medium, wherein said active ingredient is advantageous for a plant seed or a plant.

A capsule is typically defined as a (small) gelatinous (or any other film forming material) case enclosing a certain amount of said at least one active ingredient. The capsule may be soft or hard and must be capable of being planted with standard sowing equipment. Such a capsule comprises a film forming material as well as at least one active ingredient. Suitable expedients are diluents, lubricants, disintegrants, binders or coloring agents.

The present available active-ingredient-containing pellets have the disadvantage that they are dry or dried pellets and hence an active ingredient which is not stable in a dry or dried environment or an active ingredient which is only available as a fluid can currently not be easily applied. This problem is solved by the use of an active-ingredient-containing capsule. Preferably, said liquid medium is oil or water. In yet another preferred embodiment said liquid medium is oil dispersed in water.

This part of the invention is for example used to combat mildew on lettuce. For example an experimental active ingredient effective against mildew which is present as an aqueous solution. Preferably, such an active-ingredient-containing capsule also comprises a component that is capable of regulating the release of said anti-mildew active ingredient. Even more preferably, the relase is such that the active ingredient is released during the larger part of the growing season, preferably during the complete growing season.

Another example is the use of Rhizobium as an active ingredient. Rhizobacteria assist in the nitrogen binding for Papilionaceous plants. This bacterium is intolerant to drought and is supplied as a peat formulation with a water activity above 0.95. A rhizobacterium-comprising capsule is particular advantageous for use with plants such as clover, beans, lucerne or soybean. Preferably, said capsule further comprises a component that is capable of regulating release and even more preferably said rhizobacterium is released at the start of germination.

Yet another example is the use of Mycchoriza fungi as an active ingredient in an active-ingredient-containing capsule according to the invention.

Another example is the use of Cedemon as an active ingredient. This active ingredient comprises Pseudomonas bacteria in an oil. A Pseudomonas-containing capsule is preferably used together with wheat. Even more preferred, such a capsule is further provided with a component that is capable of regulating the relase of said Pseudomonas and even more preferably said release is throughout the growing season.

Methods for preparing a capsule as well as methods to fill a capsule with a desired active ingredient are well known in the field of medicine.

Moreover, an active-ingredient-containing capsule according to the invention may further be provided with means to control the release of the active ingredient. Details on components capable of regulating release will be provided later on.

In another embodiment, the invention provides an active-ingredient-containing pellet comprising a super absorbent polymer (SAP) and at least one active ingredient, wherein said active ingredient is advantageous for a plant seed or a plant. In a preferred embodiment, said SAP is arranged around a core. In yet another preferred embodiment, said SAP is present as a core.

In an even more preferred embodiment, said active ingredient is stable in a non-aqueous solution/environment (e.g. for example an active ingredient which is stable as a powder/solid phase). In another preferred embodiment, said active ingredient is an active ingredient in oil.

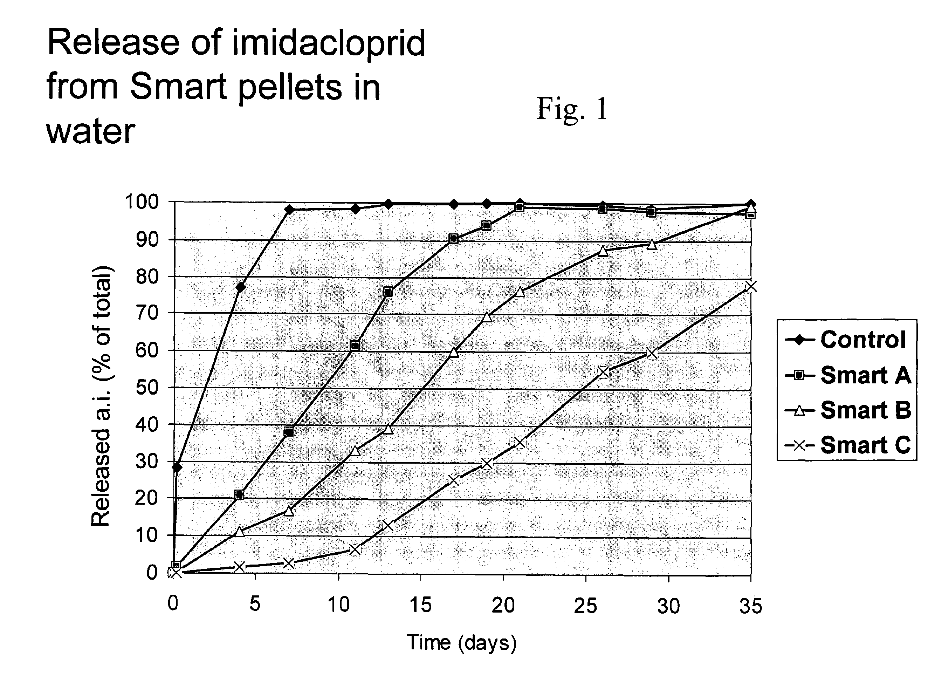

A super absorbent polymer is a compound that is capable of retaining fluids and can be a natural as well as a synthetic polymer. Examples of a SAP are sodium polyacrylates, potassiumpolyacrylates, crosslinked poly acrylates, modified cellulose esthers and starchcrafted cross-linked poly acrylates. Most seed pelleting methods comprise the use of water in one or multiple steps. As a consequence a SAP cannot be applied to a seed-containing pellet, because it would interfere with the pelleting method. To be able to use the advantageous water-retaining effects of a SAP the present invention provides an active-ingredient-containing pellet comprising a super absorbent polymer (SAP) and at least one active ingredient. An active-ingredient-containing pellet can be made with a solvent (instead of water) and hence a SAP can be applied to an active-ingredient-containing pellet. In a preferred embodiment, said SAP is arranged around a core. Such a core may for example be biodegradable or inert. An inert core is typically composed of a material that does not influence (in any way) the (germinating) seed, seedling, plant or any plant part (such as a tuber). Such an inert core has preferably one or more of the following features: the inert core is not a source of nutrients for micro-organisms in general and more specific not for (plant) pathogens and/or the inert core does not contain any (plant) pathogen and/or the inert cores in a particular batch have a certain extent of uniformity and/or the inert core must not be able to have a chemical interaction with the active-ingredient or the seed (or seedling or plant(part)). The desired degree of uniformity depends on the to be produced active ingredients containing pellet. In case of, for example, an active-ingredient-containing pellet with only a core with a thin layer of active, the core must have a high degree of uniformity, preferably above 90% and even more preferably above 95%. In case of an active-ingredient-containing pellet with a small core which is enlarger with inert filler materials, the uniformity of the core is of less importance, because the uniformity will be increased upon pelleting with the inert materials (see for example Figures 1 to 4).

In a preferred embodiment, the inert core is a round structure of uniform size, but other shapes and structures with uniform size distribution can be used as well. A suitable example is a glass bead with a diameter of 1 to 2 mm. However depending on the application (for example on the size of the seeds with which the active ingredient-containing pellets will be used) also smaller beads (e.g. tobacco pellet) can be used or larger cores. In a more preferred embodiment, the inert core is porous

In yet another preferred embodiment, said SAP is present as a core and the active ingredient is arranged in or around said core. In a preferred embodiment, the SAP core is a round structure of uniform size, for example 0.1-10 mm, preferably 1-2 mm.

In yet another embodiment, the invention provides a SAP-containing pellet. Again, said SAP may be arranged around a (for example biodegradable or inert) core or the SAP is present as a core.

Preferably, a SAP-comprising pellet is used as a second or third pellet together with a seed-containing pellet as well as with a first (and second) active-ingredient-containing pellet.

A person skilled in the art is very well aware of methods for preparing an active-ingredient-containing pellet with standard know technology like film coating on rotostat equipment or in pan coat equipment or fluidbed systems with polymer systems such as starch, poly saccharides, polyvinyl alcohols, acetates, acrylates, polyurethanes etc. The active-ingredient containing pellet can be prepared with commonly known seed pelleting technologies with filler material commonly used in the seed coating business such as, for example, clay, perlite, diatomaceous earth, quartz, cellulose, vermiculite, mica, etc.

As already discussed multiple types of cores can be used, for example an inert core or a biodegradable core or a dead/killed seed core.

In yet another embodiment, the invention provides an active-ingredient-containing pellet comprising a clump of micro-organisms as a core and at least one active ingredient, wherein said active ingredient is advantageous for a plant seed or a plant. This is particular advantageous for micro-organisms that do not (or not long enough) survive on a seed-containing pellet. Normally seed-containing pellets are prepared in advance and will be stored for at least a couple of weeks or months. In a preferred embodiment, said clump of micro-organisms is lyophilized. Growth of micro-organisms in general and growth of micro-organisms as a clump of material is well known within the art. In case the micro-organisms will not grow as a clump it is possible to add a component to a medium that promotes the clumping together of said micro-organisms. This is for example possible by providing a small particle (preferably inert or biodegradable and round of structure) which has a sticky surface and promotes sticking of the micro-organisms to the particle. In case any of the created clumps of micro-organisms does not have a round structure this may be accomplished by polishing said (lyophilized) clump of micro-organisms. In a preferred embodiment the micro-organisms used as a core have an advantageous effect on a plant or plant seed in which case at least two active ingredients are present, i.e. said micro-organism as well another active ingredient.

Active ingredients that are phytotoxic for a plant seed (i.e. active ingredients that negatively interfere with for example germination) have been applied separate from seed-containing pellets as active-ingredient-containing pellets.

In a further embodiment, the invention provides them as one structure, i.e. an active-ingredient and seed-containing structure comprising at least one seed, a coating and at least one active ingredient, wherein said active ingredient is present as an active-ingredient-containing pellet. In a preferred embodiment, said structure is arranged from the inside to the outside as at least one seed, a coating around said seed and at least one active-ingredient-containing pellet, wherein said pellet is arranged around or in said coating. In an even more preferred embodiment, said active ingredient is phytotoxic to a plant seed.

The availability of such an active-ingredient and seed-containing structure improves precision sowing, because every structure is designed to comprise the necessary amount of active ingredient.

In a preferred embodiment, said seed is a multiseed. Such a multiseed may be composed of a couple of seeds that form one clump of seeds or such a multiseed may comprise a couple of seeds arranged around for example an inert core or a couple of smaller seeds arranged around a larger (killed) seed.

In yet another embodiment, the invention provides an active-ingredient-containing pellet comprising a source of nutrients for a particular pathogen (for example a fungus) as well as a pesticide directed against said particular pathogen (in this example a fungicide). Preferably, the source of nutrients is arranged on the outside of said pellet and thereby attracting (if available) said pathogen. Even more preferably, the pesticide is arranged underneath the source of nutrients and is released when the pathogen starts feeding on the source of nutrients. In this way the pesticide will only be released if a pathogen is present (and as a result the pathogen will be killed) and the environment will not be polluted with any unnecessary pesticide.

Any of the above-mentioned modified active-ingredient-containing pellets (active-ingredient-containing capsule or an active-ingredient-containing pellet or an active-ingredient and seed-containing structure) may further be modified by comprising at least one component capable of regulating the release of said active ingredient. Such a component is used to release at least one active ingredient at a desired time point. Different active ingredients may call for a different release time. For example, if at least one of the active ingredients is a micronutrient that is needed for or improves flower- and/or seed development such an active component is preferably released from the active-ingredient-containing pellet at a time point late in the development of the corresponding plant. Or if the active ingredient is a macronutrient such as phosphate, this is preferably released at the beginning of the plant growth/development. The choice of release of a pesticide largely depends on the type of pest that needs to be encountered. If the pest is active in the early stages of plant growth, the pesticide is preferably released at an early time point and if the pest is active in later stages of plant growth, the pesticide is preferably released at a later time point.

The skilled person is aware of the fact that different types of release patterns can be obtained by using the appropriate components. Release patterns such as a burst or a delayed or a slow or a controlled or a sustained or an extended release are feasible. The different release patterns are typically defined as follows:
- lag burst is defined as initially little or no release followed in time by a sudden strong release over a short time period
- delayed or sustained is defined as showing a release pattern like not-delayed but the start of the release is postponed
- slow is defined as from the start a very gradual release, typically over a long time period
- controlled is defined as release is manipulated according to desired levels over a desired time period.

Examples of release patterns are provided herein within the experimental part.

The released active ingredient may originate from core (in case of for example a porous (inert) core) or from the coating around said core. Moreover, if more than one (for example 2 or 3) active ingredients are present on an active-ingredient-containing pellet or on a seed-containing pellet said active ingredients may be coated/pelleted on said pellets in different layers with different release patterns. For example, an active-ingredient-containing pellet comprising at least 2 pesticides, one of the pesticides is needed during seed germination and the second one three weeks later after development of a plant. The pellet then comprises at least two release layers: one which releases the first pesticide during germination and the other one releases the second pesticide approximately 3 weeks later. The different release patterns may also be obtained by providing different active-ingredient pellets which show the different desired release patterns.

Moreover, the release of a pesticide may be curative or precautionary.

It is clear to the skilled person that a component used to establish a certain released pattern is carefully selected not only in respect of the appropriate component but also in respect of the concentration and layer thickness. Components used can be from the groups: ethyl acrylate copolymers (Eudragit,Degussa), poly-urethanes, polyvinylacetates polymers and copolymers, poly lactic acids, poly acrylamide-based polymers, hydrogels made by essential anhydrous polymerisation reaction etc.

The release coatings are provided with standard coating/pelleting techniques which are already mentioned above.

In case it is necessary to disinfect seeds before subjecting them to a coating/pelleting, such disinfection can be carried out by methods known by the skilled person, such as chemical or biological disinfection or warm water or steam treatment.

Although any active-ingredient-containing capsule or any active-ingredient-containing pellet is preferably applied together with a seed-containing pellet (or a true seed), an active-ingredient-containing capsule/pellet may also used together with a plant part such as a potato tuber or flower bulb or with a plant cutting or a rootstock. Moreover, an active-ingredient-containing capsule or an active-ingredient-containing pellet according to the invention may also be used when a plant is transferred from one growing medium to another growing medium (for example from soil type a to soil type b).

In another embodiment, the invention provides a method for improving the germination of a seed-containing pellet, comprising applying 1 to 10 active-ingredient-containing capsules as described or 1 to 10 active-ingredient-containing pellets as described (or any combination thereof) with at least one seed-containing pellet to soil. In yet another embodiment, the invention provides a method for improving the germination of a seed-containing pellet, comprising applying at least one active-ingredient-containing capsule as described or at least one active-ingredient-containing pellet as described with at least 1 to 10 seed-containing pellets. Instead of a method for improving the germination of a seed-containing pellet, such a method is also used to improve the germination of a true seed or to improve the growth of a rootstock or a tuber or a flower bulb or a plant cutting. In view of the earlier made remarks it is clear that such methods can also be used to improve the growth of a plant. In such a case one plant is provided with 1 or multiple active-ingredient-containing pellets/capsules for example by putting said pellets/capsules in the soil. Moreover, in case of an active-ingredient and seed-containing structure this structure may by combined with at least one active-ingredient pellet.

In a preferred embodiment, said seed-containing pellet or said active-ingredient and seed-containing structure is a multiseed. Such a multiseed may be composed of a couple of seeds that form one clump of seeds or such a multiseed may comprise a couple of seeds arranged around for example an inert core or a couple of smaller seeds arranged around a larger (killed) seed.

If more than one active-ingredient-containing pellet/capsule is used per seed-containing pellet or per active-ingredient and seed-containing structure, the active-ingredient-containing pellets/capsules may be identical or different (for example different in the amount of a particular pesticide or different in the kind of active ingredient, for example, one pellet comprising a pesticide and another comprising a hormone etc.). Another example wherein one would use different active-ingredient-containing pellets/capsules is if for example two active ingredients are incompatible (and can thus not be present on one and the same pellet) or if different release patterns are desired.

One of the advantages of these methods is a large amount of flexibility. For example the choice for the amount of pesticide (as active ingredient)-containing pellets is made on the actual pest pressure; pelleted seeds are prepared in advance and dependent on the actual pest pressure it is decided how many pesticide-containing pellets are applied

The invention further provides a method according to the invention, wherein at least part of the active-ingredient-containing pellets/capsules is applied after applying a seed-containing pellet (or after applying an active-ingredient and seed-containing structure) or wherein an active-ingredient-containing pellet is applied on top of the soil. This again introduces a lot of flexibility because an active-ingredient-containing pellet can be applied simultaneous with the seed-containing pellet (or with an active-ingredient and seed-containing structure) as well as prior to sowing or after sowing of the seed-containing pellet (or of active-ingredient and seed-containing structure). Moreover, depending on the desired use of the active-ingredient-containing pellet it may be placed in the soil as well as on top of the soil. For example, an active-ingredient-containing pellet comprising as an active ingredient a snail or bird repellent is placed on top of a field. Preferably, such an active-ingredient-containing pellets has the appearance of a seed pellet.

The invention will be explained in more detail in the following examples, which are not limiting the invention.

### Experimental part

### Example 1

We have produced smart pellets of dead Brassica seeds with 200 gram Gaucho 70WS (Bayer) per 100.000 pellets with standard seed coating equipment. These Brassica smart pellets have been film coated with several layers of a polymer system based on polylactic acids provided by Croda Bowmans Chemicals LtD. These smart pellets are tested in field trials by an experimental station (see example 2).

This experiment is designed to give some insight whether it is possible to control the release of imidacloprid with polylactic acid polymers. Moreover, will lag burst release of imidacloprid improve the control of trips in white cabbage?

The seeds were pelleted on a rotary coater. Rate of active ingredient is 140 g a.c./100.000 seeds.

The release of all smart pellet types is measured in water and during the plant raising stages by obtaining a sample from each smart pellet type. The field trials are performed by an experimental station (example 2).

| Object no | | | Amount of polymer |
|---|---|---|---|
| 81.13998.6001 | Control smart pellet | | |
| 81.13998.6002 | Smart pellet A | Thin layer | 1.42 mg/pellet |
| 81.13998.6003 | Smart pellet B | Medium layer | 1.94 mg/pellet |
| 81.13998.6004 | Smart pellet C | Thick layer | 2.69 mg/pellet |

The thickness of the layer is defined as the amount of polymer/pellet.
Figure 1 discloses the release of imidacloprid from the dummy in water.
Figure 2 discloses the release of imidacloprid from the dummy in the greenhouse at the plant raiser (first 4 weeks) followed by the release in the field.

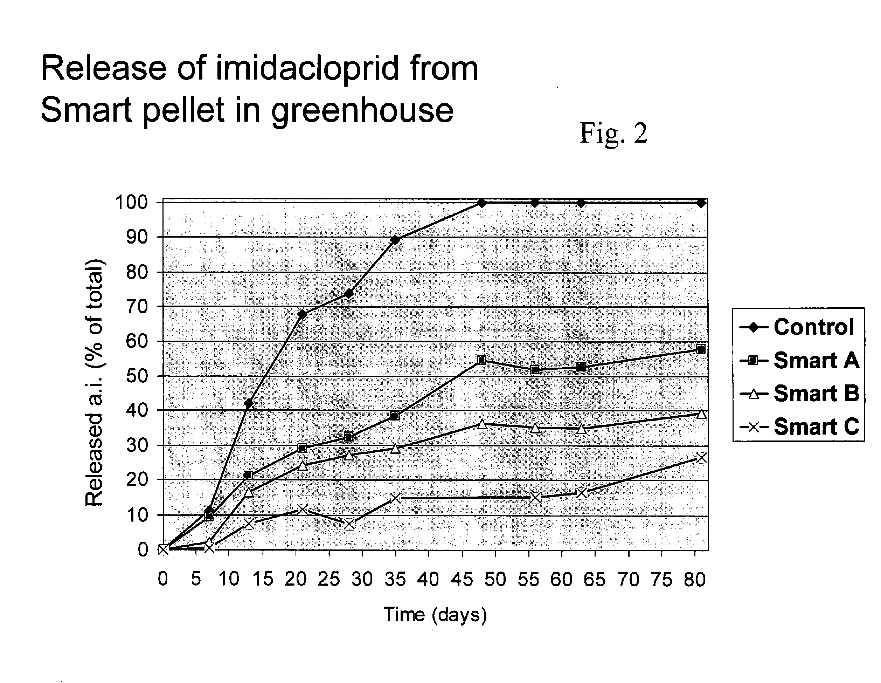

It is clear from Figures 1 and 2 that the release of imidacloprid from the dummy pellets is slowed down with the used coating. With this technology it is feasible to release active ingredient during the complete growing season

This experiment was repeated and analogous results were obtained in the repetition.

### Example 2

The efficacy of the imidacloprid pellets prepared in example 4 have been tested on their effect on the control of thrips in white cabbage.

The following object were tested and compared:

| code | object | Dose of Gaucho (rate of active ingredient) |
|---|---|---|
| 1 | control | - |
| 2 | Gaucho seedcoating | 2 g / 1000 plants (140 g a.i. / 100.000 seeds) |
| 3 | control + Gaucho dummy | 2 g / 1000 plants (140 g a.i. / 100.000 seeds) |
| 4 | control + slow release type A | 2 g / 1000 plants (140 g a.i. / 100.000 seeds) |
| 5 | control + slow release type B | 2 g / 1000 plants (140 g a.i. / 100.000 seeds) |
| 6 | control + slow release type C | 2 g / 1000 plants (140 g a.i. / 100.000 seeds) |

**Trial set up**

| Trial locatie | Experimental station |
|---|---|
| Cultivar | thrips sensitive variety |
| Sowing date | 20 april 2005 |
| Planting date | 1 juni 2005 |
| Previous crop | Grass |
| (% lutum) | (20) |
| % organic matter | 5,9 |
| Fertilizer kg/ha | 270 kg N als KAS |
| reps | 4 |
| Herbicide use | Butisan S 2 l/ha and Centium CS 0,2 l/ha on 6 juni 2005 |
| yield | 7 november 2005 |

| treatments | | Number of thrips per 5 heads | | | | | |
|---|---|---|---|---|---|---|---|
| | | 27 July | 9 August | 24 August | 9 Sept. | 23 Sept. | 13 Oct. |
| 1 | untreated | 5,0 | 1,3 | 1,3 | 19,3c | 16,8 | 18,3 |
| 2 | Gaucho | 5,3 | 1,5 | 0,8 | 12,5b | 15,3 | 19,8 |
| 3 | Gaucho dummy | 4,3 | 0,5 | 0,0 | 9,5ab | 8,5 | 16,0 |
| 4 | slow release A | 4,8 | 0,5 | 0,5 | 11,3ab | 14,0 | 25,0 |
| 5 | slow release B | 3,0 | 0,3 | 0,5 | 13,8b | 8,0 | 17,0 |
| 6 | slow release C | 3,8 | 1,8 | 1,5 | 7,0a | 9,0 | 12,5 |
| P- | | 0,916 | 0,665 | 0,578 | 0,004 | 0,268 | 0,805 |
| Lsd | | 4,8 | 2,3 | 1,9 | 5,3 | 9,7 | 18,7 |

Unfortunately, the pest pressure was (due to the weather) extremely low. The control without any pesticide had only 18 thrips per head at the end of the season, whereas in example 3 which had a better pest pressure the control head contained 48 thrips per head.

### Example 3

In another experiment with the control of thrips in white cabbage, it was demonstrated that the use of more then one active-ingredient-containing pellet per one seed-containing pellet results in better control of pests. Moreover, this experiment also revealed the efficacy of one active-ingredient-containing pellet per seed-containing pellet. The setup of this trial was equal as described in example 2.

The table gives the results of this trial. The control in this trial had 48 thrips per head whereas the control of example 2 only had 18.

| | Imadcloprid per plant | Number of thrips per 5 heads | | | |
|---|---|---|---|---|---|
| treatment | | 13-July | 8-August | 7-Sep. | 13-Oct. |
| control | 0 mg | 1 | 0,3 | 16 | 48 |
| Seed treatment | 1,4 mg | 0 | 0 | 11 | 23 |
| Active in seed containing pellet one smart pellet | 1,4 mg | 0 | 0 | 8 | 14 |
| two smart pellets | 2,8 mg | 0,5 | 0 | 11 | 4 |
| Soil drench | 3,5 mg | 0 | 0 | 7 | 5 |

The data of this trial clearly show that already one smart pellet results in lower pest occurrence. The control of the pest could even be increased by using two smart pellets per plant. The rate of active ingredient was raised from 1.4 to 2.8 mg per plant which is still lower that the allowed soil drench application of 3.5 mg/plant, but the protection is similar.

The present invention is not limited to the embodiments mentioned in the above examples. They can be varied in many ways, all deemed within the scope of the appended claims.

### Description of figures

**Figure 1** discloses the release of imidacloprid from the dummy in water.
**Figure 2** discloses the release of imidacloprid from the dummy in the greenhouse at the plant raiser (first 4 weeks) followed by the release in the field.

## Claims

1. An active-ingredient-containing capsule, comprising at least one active ingredient in a liquid medium, wherein said active ingredient is advantageous for a plant seed or a plant.

2. An active-ingredient-containing capsule according to claim 1, wherein said liquid medium is oil.

3. An active-ingredient-containing capsule according to claim 1, wherein said liquid medium is water.

4. An active-ingredient-containing pellet comprising a super absorbent polymer (SAP) and at least one active ingredient, wherein said active ingredient is advantageous for a plant seed or a plant.

5. An active-ingredient-containing pellet according to claim 4, wherein said SAP is arranged around a core.

6. An active-ingredient-containing pellet according to claim 4, wherein said SAP is present as a core.

7. An active-ingredient-containing pellet comprising a clump of micro organisms as a core and at least one active ingredient, wherein said active ingredient is advantageous for a plant seed or a plant.

8. An active-ingredient-containing pellet according to claim 7, wherein said clump of micro organisms is lyophilized.

9. An active-ingredient and seed-containing structure comprising at least one seed, a coating and at least one active ingredient, wherein said active ingredient is present as an active-ingredient-containing pellet.

10. An active-ingredient and seed-containing structure according to claim 9, wherein said structure is arranged from the inside to the outside as at least one seed, a coating around said seed and at least one active-ingredient-containing pellet, wherein said pellet is arranged around or in said coating.

11. An active-ingredient-containing capsule according to any one of claims 1 to 3 or an active-ingredient-containing pellet according to any one of claims 4 to 8 or an active-ingredient and seed-containing structure according to claim 9 or 10, further comprising at least one component capable of regulating the release of said active ingredient.

12. A method for improving the germination of a seed-containing pellet, comprising applying 1 to 10 active-ingredient-containing capsule according to any one of claims 1 to 3 or an active-ingredient-containing pellet according to any one of claims 4 to 8 or an active-ingredient and seed-containing structure according to claim 9 or 10 with at least one seed containing pellet to soil.

13. A method for improving the germination of a seed-containing pellet, comprising applying at least one active-ingredient-containing pellet with at 1 to 10 containing pellets.

14. A method according to claim 12 or 13, wherein said seed-containing pellet is a multiseed.

15. A method according to any one of claims 12 to 14, wherein at least part of the active-ingredient-containing pellets is applied after applying a seed-containing pellet.
